# EUROPÄISCHE PATENTSCHRIFT

(11) **EP 1 173 350 B1**
(45) Veröffentlichungstag und Bekanntmachung des Hinweises auf die Patenterteilung: **20.07.2005**
(21) Anmeldenummer: 00915132.5
(22) Anmeldetag: 02.03.2000
(51) Int. Cl.: B60R 21/00

(54) **KRAFTFAHRZEUG-STEUERSYSTEM, INSBESONDERE KRAFTFAHRZEUG-INSASSENSCHUTZSYSTEM**
MOTOR VEHICLE CONTROL SYSTEM, ESPECIALLY A MOTOR VEHICLE OCCUPANT PROTECTION SYSTEM
SYSTEME DE COMMANDE POUR VEHICULE, EN PARTICULIER SYSTEME DE PROTECTION DES PASSAGERS D'UN VEHICULE

(30) Priorität: 03.03.1999 DE 19909297
(43) Veröffentlichungstag der Anmeldung: 23.01.2002
(73) Patentinhaber: SIEMENS AKTIENGESELLSCHAFT, 80333 München (DE)
(72) Erfinder: HERMANN, Stefan, D-93096 Köfering (DE)
(86) Internationale Anmeldenummer: PCT/DE2000/000656
(87) Internationale Veröffentlichungsnummer: WO 2000/051846

(56) Entgegenhaltungen:
- DE-A- 4 425 846
- US-A- 4 329 871
- US-A- 4 420 968
- US-A- 5 631 834
- US-A- 5 787 377

## Beschreibung

Die Erfindung betrifft ein Kraftfahrzeug-Steuersystem, insbesondere Kraftfahrzeug-Insassenschutzsystem, gemäß dem Oberbegriff des Patentanspruchs 1.

Aus der DE 44 25 846 A1 ist ein derartiges Steuersystem in Form eines Airbag-Steuersystems bekannt, das einen zentralen Kollisionssensor und ausgelagerte Seitenkollisionssensoren umfaßt. Die vom zentralen Sensor erzeugten Sensorsignale werden in analoger Form an die Steuereinrichtung angelegt und dort in digitale Form umgewandelt, während die Ausgangssignale der ausgelagerten Sensoren einer Vorverarbeitung im jeweiligen Satelliten unterzogen werden und die bei der Vorverarbeitung erhaltenen Bewertungsergebnisse in digitaler Form zur Steuereinrichtung übertragen werden.

Die US 4 329 871 A oder die US 4 420 968 sind gattungsbildende Dokumente.

Der Erfindung liegt die Aufgabe zugrunde, ein Kraftfahrzeug-Steuersystem zu schaffen, das eine gute Signalverarbeitung ermöglicht.

Diese Aufgabe wird mit den im Patentanspruch 1 genannten Merkmalen gelöst.

Vorteilhafte Ausgestaltungen der Erfindung sind in den Unteransprüchen angegeben.

Bei der Erfindung ist im Empfänger, das heißt in der Steuereinrichtung, eine Trennung der Nutz- und Störsignalkomponenten im Frequenzbereich vorgesehen. Hierdurch ergibt sich hinsichtlich der Nutzsignalkomponente ein verbesserter Signal/Rauschabstand bei der Weiterverarbeitung, da die Störsignalkomponenten mindestens teilweise durch das Nutzsignal-Filter gesperrt werden. Zugleich stellt das Ausgangssignal des zweiten, die Störsignalkomponente erfassenden Filters ein Indiz für die Stärke der Störsignalanteile bereit, die bereits im Sensor erzeugt und/oder auf der Übertragungsstrecke zwischen dem Sensor und der Steuereinrichtung eingekoppelt worden sind. Dies stellt ein Maß für die Qualität und Zuverlässigkeit der Nutzsignalkomponente bereit, das bei der Auswertung der Nutzsignalkomponente berücksichtigt werden kann, beispielsweise durch Festlegung von variablen Zuverlässigkeitsgrenzen für das durch Auswertung der Nutzsignalkomponente erhaltene Ergebnis, das hier beispielsweise die erfaßte Beschleunigung signalisiert.

Vorzugsweise ist das für die Nutzsignalkomponente vorgesehene Filter ein Bandpaßfilter, so daß sowohl niederfrequente als auch hochfrequente Störkomponenten unterdrückt werden. Das zweite, für die Störsignalkomponenten vorgesehene Filter ist vorzugsweise ein Bandsperrfilter, das die Nutzsignalkomponenten unterdrückt und dessen Filterkurve (Frequenzgang) in bevorzugter Ausgestaltung im wesentlichen komplementär zu derjenigen des Bandpaßfilters verläuft. Damit findet eine vollständige Trennung der Stör- und Nutzsignalkomponenten im Frequenzbereich statt, wobei alle Signale, deren Spektralanteile außerhalb des Nutzbands liegen, als Störsignale betrachtet werden.

Vorzugsweise wird das Ausgangssignal des zweiten Filters durch einen Gleichrichter gleichgerichtet, so daß eine unipolare Weiterverarbeitung möglich ist. In vorteilhafter Weise wird dann ein Schwellwertvergleich ausgeführt, der in einfacher Weise mittels eines einzigen Schwellwerts realisierbar ist. Wenn die festgelegte Schwelle überschritten wird, stellt dies einen Hinweis auf starke Störungen und damit auf eine gestörte Nutzsignalkomponente am Ausgang des ersten Filters dar, so daß die Steuereinrichtung dann entweder dieses Nutzsignal überhaupt nicht auswertet oder zumindest das bei Nutzsignalauswertung erhaltene Ergebnis wie etwa die erfaßte Beschleunigung als recht unzuverlässig einstuft und beispielsweise vor Treffen einer Steuermaßnahme wie etwa der Zündung einer Zündpille des Insassenschutzsystems noch andere Sensorsignale auswertet oder beispielsweise die Schwelle für die Zündentscheidung höher setzt. Hierdurch lassen sich lediglich störkomponentenbedingte scheinbare Erhöhungen der gemessenen Beschleunigung ausmerzen.

Vorzugsweise kann an den Ausgang des zweiten Filters oder einer mit dessen Ausgang verbundenen Gleichrichterschaltung ein Tiefpaßfilter oder auch eine Glättungsschaltung angeschlossen werden, so daß eine gewisse Glättung und Mittelwertbildung des Störsignals stattfindet. Dieser geglättete Wert kann dann einem Schwellwertvergleich unterzogen werden, so daß eine Schwellwertüberschreitung nicht mehr durch nur kurzzeitige starke Störspitzen ausgelöst wird, sondern nur dann, wenn tatsächlich der momentane Durchschnittswert der Störungen den Schwellwert überschreitet.

In vorteilhafter Ausgestaltung ist auch der Sensor mit einem Bandpaßfilter versehen, das eine Bandpaßfilterung des reinen Sensorausgangssignals bewirkt und damit die zur Steuereinrichtung übertragene Nutzsignalkomponente bildet. Zur Erfassung von sensorinternen Störungen ist der Sensor vorzugsweise noch mit einem weiteren Spektralfilter, insbesondere Tiefpaßfilter ausgestattet, das für Sensorstörungen repräsentative Spektralanteile, z.B. die Gleichstromkomponente, durchläßt. Dem Spektralfilter ist vorzugsweise ein Verstärker nachgeschaltet, so daß eine im Sensor erfaßte Störung zu einer aktiv verstärkten Störsignalkomponente im Sensor führt. Damit ist empfangsseitig sichergestellt, daß das Ausgangssignal des für die Störsignalkomponenten vorgesehenen zweiten Filters hohen Wert annimmt und dadurch der Steuereinrichtung zuverlässig gemeldet wird, daß das Nutzsignal stark gestört ist.

Im Sensor werden die Nutzsignal- und Störsignalkomponente vorzugsweise miteinander verknüpft wie etwa addiert und können damit gemeinsam über dieselbe Signalübertragungsstrecke geleitet werden.

Die beschriebene Ausgestaltung ermöglicht es auch, auf der Übertragungsstrecke, das heißt üblicherweise der den ausgelagerten Sensor mit der zentralen Steuereinrichtung verbindenden Signalleitung, eingekoppelte Störungen in der Steuereinrichtung zu detektieren und gegebenenfalls zu entfernen.

Die vorgeschlagene analoge Signalübertragung läßt sich bei Kraftfahrzeug-Insassenschutzsystemen aller Art einsetzen, bei denen ein Sensor ein analoges Sensorsignal erzeugt, das zu einer auswertenden Steuereinrichtung zu übertragen ist. Auch andere Kraftfahrzeug-Steuersysteme mit einem oder mehreren analog arbeitenden Sensoren und einem oder mehreren, deren Ausgangssignale auswertenden Steuergeräten wie etwa einem Getriebesteuergerät, einem Motorsteuergerät und dergleichen, lassen sich in der angegebenen Weise ausgestalten.

Die Erfindung wird nachstehend anhand eines Ausführungsbeispiels unter Bezugnahme auf die einzige Zeichnung beschrieben.

Das hier als Insassenschutzsystem ausgebildete Kraftfahrzeug-Steuersystem umfaßt einen ausgelagerten Satelliten 1, in dem ein Beschleunigungssensor 2, z.B. ein Seitenkollisionssensor, enthalten ist. Der Beschleunigungssensor 2 erzeugt ein analoges, die aktuell am Ort des Satelliten auftretende Beschleunigung repräsentierendes Ausgangssignal, das an einem Eingang eines Bandpaßfilters 3 angelegt wird. Das Bandpaßfilter 3 unterdrückt die eventuell im oberen und unteren Frequenzbereich vorhandenen Spektralanteile des Sensorausgangssignals und gibt als Ausgangssignal ein bandbegrenztes Signal ab, das lediglich die informationstragenden Spektralanteile des Sensorausgangssignals enthält.

Das analoge Ausgangssignal des Beschleunigungssensors 2 wird weiterhin an ein Tiefpaßfilter 4 angelegt, das nur den niederfrequenten Spektralanteil des Sensorausgangssignals einschließlich der Gleichstromkomponenten durchläßt und dessen Grenzfrequenz so festgelegt ist, daß sein Ausgangssignal im wesentlichen keine Nutzsignalkomponenten enthält (die Grenzfrequenz liegt beispielsweise bei 2 Hz). Das Ausgangssignal des Tiefpaßfilters 4 wird durch einen dem Tiefpaßfilter 4 nachgeschalteten Verstärker 5 verstärkt. Der Verstärker 5 kann als einfacher Verstärker mit festem Verstärkungsfaktor ausgelegt sein. Sofern jedoch der Beschleunigungssensor 2 auch im Ruhezustand, d.h. bei Beschleunigung 0, normalerweise ein Ausgangssignal mit einer bestimmten Amplitude abgibt, sind Kompensationsmaßnahmen zur Kompensation des Einflusses dieses Amplitudenwerts vorgesehen. Hierzu kann beispielsweise am oder im Tiefpaßfilter 4 ein dieser bei fehlender Beschleunigung abgegebenen Amplitude entsprechender Offsetwert subtrahiert werden, so daß dieser "auslegungsgemäße" Gleichanteil neutralisiert ist. Alternativ kann der Verstärker 6 auch als Differenzverstärker ausgelegt sein, an dessen anderem, nicht mit dem Tiefpaßfilter 4 verbundenem Eingang ein dem zu erwartenden normalen Amplitudenwert entsprechender Offsetwert angelegt ist. Damit werden dann nur die von der normalerweise zu erwartenden Amplitude abweichenden, auf Störungen hindeutenden niederfrequenten Signalanteile aktiv verstärkt. In der Zeichnung ist der zur Offset-Kompensation vorgesehene zweite Eingang des Verstärkers 5 mit dem Bezugszeichen 6 bezeichnet.

Die Ausgangssignale des Bandpaßfilters 2 und des Verstärkers 5 werden durch ein Verknüpfungsglied in Form eines Addierers 7 zusammengefaßt, dessen Ausgang an eine Verbindungsleitung 8 angeschlossen ist, die den Satelliten 1 mit einer entfernt angeordneten Steuereinrichtung 9 in Form eines zentralen Steuergeräts verbindet.

Die Steuereinrichtung 9 enthält ein eingangsseitig an die Verbindungsleitung 8 angeschlossenes Bandpaßfilter 10, dessen Durchlaßband vorzugsweise auf gleichen Frequenzbereich wie das Bandpaßfilter 3 eingestellt ist. Das Bandpaßfilter 10 selektiert damit die Nutzsignalkomponente und gibt an seinem Ausgang ein Nutzsignal 11 ab. Dieses Nutzsignal 11 wird von einer nicht dargestellten Auswerteschaltung der Steuereinrichtung überwacht und ausgewertet, um hieraus den vom Beschleunigungssensor 2 detektierten Beschleunigungsverlauf zu erfassen und bei zu hoher Beschleunigung notwendige Sicherheitsmaßnahmen wie etwa das Zünden eines Airbags, die Betätigung von Gurtstrammern oder dergleichen zu veranlassen.

Die Steuereinrichtung 9 enthält weiterhin ein Bandsperrfilter 12, das eingangsseitig ebenso wie das Bandpaßfilter 10 an die Verbindungsleitung 8 angeschlossen ist und damit das analoge Sensorsignal empfängt. Die Frequenzkurve des Bandsperrfilters ist vorzugsweise invers zum Frequenzgang des Bandpaßfilters 10 ausgelegt, so daß nur diejenigen hoch- und niederfrequenten Spektralanteile durch das Bandsperrfilter 12 hindurchtreten, die vom Bandpaßfilter 10 gesperrt werden. Am Ausgang des Bandsperrfilters wird damit ein Störsignal 13 abgegeben, das für die empfangenen Störsignalkomponenten und somit für die Qualität des Nutzsignals 11 repräsentativ ist. Diese Störsignalkomponenten können entweder durch den Sensor 2 selbst oder bei der Übertragung auf der Verbindungsleitung 8 durch Einstreuungen hervorgerufen werden.

Die Steuereinrichtung 9 umfaßt einen nicht dargestellten Gleichrichter, dem das Störsignal 13 zugeführt wird, und der das gleichgerichtete Ausgangssignal an ein Tiefpaßfilter zur Tiefpaßfilterung abgibt. Das tiefpaßgefilterte Signal wird an einen Schwellwertdetektor angelegt, der das Signal mit einem festgelegten Schwellwert vergleicht. Wird der Schwellwert überschritten, ist dies ein deutlicher Hinweis auf ein gestörtes Nutzsignal 11 am Ausgang des Bandpaßfilters 10, so daß die Steuereinrichtung die Auswertung des Nutzsignals 11 entweder völlig unterdrücken kann oder breitere Toleranzschwellen vorsieht. Zusätzlich kann an den Ausgang des Bandsperrfilters 12, des Gleichrichters, des Tiefpaßfilters oder sonstiges eine Glättungsschaltung zur Glättung des Signals vor der Schwellwertdetektion angeschlossen sein. Alternativ ist es auch möglich, anstelle des Bandsperrfilters 12 direkt ein Tiefpaßfilter vorzusehen, dessen Grenzfrequenz vorzugsweise im wesentlichen gleich groß wie die Grenzfrequenz des Tiefpaßfilters 4 eingestellt ist.

Das Sensorausgangssignal 2 ist in aller Regel von sich aus bereits bandbegrenzt. Spätestens am Ausgang des Bandpaßfilters 3 liegt jedoch eine solche Bandbegrenzung sowohl im oberen als auch im unteren Frequenzbereich vor. Alle Signale mit Spektralanteilen außerhalb dieses Nutzfrequenzbands können damit als Störsignale betrachtet werden, wobei die Signaltrennung seitens der Steuereinrichtung in einfacher Weise durch das Bandpaßfilter für das Nutzsignal und das Bandsperrfilter oder das Tiefpaßfilter 12 für das Störsignal erfolgt.

Wenn die Spektralanteile des Sensorausgangssignals z.B. durch zu starke Werte auf einen Fehler schon im Sensor hinweisen, werden diese nach Filterung seitens des Filters 4 durch den Verstärker 5 noch zusätzlich verstärkt, so daß der Steuereinrichtung 9 dieser Störzustand aktiv gemeldet wird. Dieses verstärkte Störsignal läuft durch das Bandsperrfilter 12 hindurch, so daß ein starkes Störsignal 13 an die nachgeschalteten Auswertekomponenten abgegeben wird, die somit zuverlässig diese Fehlermeldung erfassen und die Auswertung des Nutzsignals 11 unterdrücken oder umschalten können.

## Patentansprüche

1. Kraftfahrzeug-Steuersystem, insbesondere Insassenschutzsystem,
mit mindestens einem Sensor (2),
der eine physikalische Größe erfaßt und ein analoges Sensorsignal abgibt,
und einer entfernt von dem Sensor angeordneten und über eine Leitung mit dem Sensor verbundenen Steuereinrichtung (9),
die das Sensorsignal empfängt und auswertet,
die ein erstes Filter (10) zum Durchlassen einer Nutzsignalkomponente des empfangenen Sensorsignals umfaßt,
an dessen Eingang das übertragene analoge Sensorsignal anliegt und dessen Ausgangssignal als Nutzsignal (11) dient, das die Steuereinrichtung (9) zur Erfassung der vom Sensor detektierten physikalischen Größe auswertet,
bei der
die Steuereinrichtung (9) ein zweites Filter (12) zum Sperren der Nutzsignalkomponente und zum Durchlassen einer im Sensor erzeugten und/oder auf der Übertragungsstrecke eingekoppelten Störsignalkomponente im empfangenen Signal aufweist,
an dessen Eingang ebenfalls das übertragene analoge Sensorsignal anliegt,
**dadurch gekennzeichnet, daß**
das Ausgangssignal des zweiten Filters (12) als Störsignal (13) dient, das von der Steuereinrichtung als vom Nutgsignal (11) unabhängiges Signal zur Erfassung der Störsignalkomponenten des Sensorsignals ausgewertet wird.

2. Kraftfahrzeug-Steuersystem nach Anspruch 1, **dadurch gekennzeichnet, daß** das erste Filter (10) ein Bandpaßfilter ist.

3. Kraftfahrzeug-Steuersystem nach Anspruch 1 oder 2, **dadurch gekennzeichnet, daß** das zweite Filter (12) ein Bandsperrfilter ist.

4. Kraftfahrzeug-Steuersystem nach Anspruch 2 und 3, **dadurch gekennzeichnet, daß** die Filterfrequenzkurven des ersten und des zweiten Filters (10, 12) komplementär zueinander verlaufen.

5. Kraftfahrzeug-Steuersystem nach einem der vorhergehenden Ansprüche, **dadurch gekennzeichnet, daß** an den Ausgang des zweiten Filters (12) ein Gleichrichter zum Gleichrichten des Ausgangssignals des zweiten Filters angeschlossen ist.

6. Kraftfahrzeug-Steuersystem nach einem der vorhergehenden Ansprüche, **gekennzeichnet durch** eine an den Ausgang des zweiten Filters (12) oder des gleichrichters gemäß Anspruch 5 angeschlossene Glättungsschaltung. «

7. Kraftfahrzeug-Steuersystem nach einem der vorhergehenden Ansprüche, **gekennzeichnet durch** einen Schwellwertdetektor, der an den Ausgang des zweiten Filters (12), das gleichrichters gemäß Anspruch 5 oder der glättungsschaltung gemäß Anspruch 6 angeschlossen ist.

8. Kraftfahrzeug-Steuersystem nach einem der vorhergehenden Ansprüche, **gekennzeichnet durch** ein Bandpaßfilter (3), das an den Ausgang des Sensors (2) angeschlossen ist und dessen Ausgangssignal die Nutzsignalkomponente darstellt.

9. Kraftfahrzeug-Steuersystem nach einem der vorhergehenden Ansprüche, **gekennzeichnet durch** ein Tiefpaßfilter (4), das eingangsseitig mit dem Ausgang des Sensors (2) verbunden ist und dessen Ausgang an einen Verstärker (5) angeschlossen ist.

10. Kraftfahrzeug-Steuersystem nach Anspruch 8 und 9, **gekennzeichnet durch** ein mit den Ausgängen des Bandpaßfilters (3) und des Verstärkers (5) verbundenes Verknüpfungsglied (7), insbesondere in Form eines Addierers, das das Sensorsignal erzeugt und über eine Verbindungsleitung (8) an die Steuereinrichtung (9) abgibt.

## Claims

1. Motor vehicle control system, especially an occupant protection system,
with at least one sensor (2),
which detects a physical quantity and delivers an analogue sensor signal,
and one control device (9) located remotely from the sensor and connected to said sensor by a line,
which receives and analyses the sensor signal,
and which includes a first filter (10) for passing a useful signal component of the received sensor signal,
to the input of which the transmitted analogue sensor signal is applied and the output signal of which serves as the useful signal (11), the latter being analysed by the control device (9) in order to capture the physical quantities detected by the sensor,
in which
the control device (9) has a second filter (12) for rejecting the useful signal component and for passing a disturbing signal component of the received signal, said component having been generated in the sensor and/or induced on the transmission path,
to the input of which the transmitted analogue sensor signal is likewise applied,
**characterised in that**
the output signal from the second filter (12) acts as the disturbing signal (13), the latter being analysed by the control device as a signal which is independent of the useful signal (11) in order to detect the disturbing signal components in the sensor signal.

2. Motor vehicle control system according to Claim 1, **characterised in that** the first filter (10) is a band-pass filter.

3. Motor vehicle control system according to Claim 1 or 2, **characterised in that** the second filter (12) is a band-rejection filter.

4. Motor vehicle control system according to Claims 2 and 3, **characterised in that** the filter frequency curves of the first and second filters (10, 12) are one another's complement.

5. Motor vehicle control system according to one of the preceding Claims, **characterised in that** a rectifier for rectifying the output signal from the second filter is connected to the output from the second filter (12).

6. Motor vehicle control system according to one of the preceding Claims, **characterised by** a smoothing circuit connected to the output from the second filter (12) or from the rectifier according to Claim 5.

7. Motor vehicle control system according to one of the preceding Claims, **characterised by** a threshold detector connected to the output from the second filter (12), the rectifier according to Claim 5, or the smoothing circuit according to Claim 6.

8. Motor vehicle control system according to one of the preceding Claims, **characterised by** a band-pass filter (3) which is connected to the output from the sensor (2) and the output signal from which is representative of the useful signal component.

9. Motor vehicle control system according to one of the preceding Claims, **characterised by** a low-pass filter (4) which is connected input-side to the output from the sensor (2) and the output from which is connected to an amplifier (5).

10. Motor vehicle control system according to Claims 8 and 9, **characterised by** a logical decision element (7) connected to the outputs from the band-pass filter (3) and the amplifier (5), in particular in the form of an adder, which generates the sensor signal and delivers it over a connection line (8) to the control device (9).

## Revendications

1. Système de commande d'un véhicule automobile, en particulier système de protection des occupants,
avec au moins un détecteur (2)
qui détecte une grandeur physique et qui émet un signal de détecteur analogique,
et un dispositif de commande (9) placé à distance du détecteur et relié au détecteur par l'intermédiaire d'une ligne,
qui reçoit et qui exploite le signal de détecteur,
qui comprend un premier filtre (10) pour laisser passer une composante de signal utile du signal de détecteur reçu,
à l'entrée duquel est appliqué le signal de détecteur analogique transmis et dont le signal de sortie sert de signal utile (11) qui est exploité par le dispositif de commande (9) pour la détection de la grandeur physique détectée par le détecteur,
dans lequel
le dispositif de commande (9) comprend un deuxième filtre (12) pour bloquer la composante du signal utile et pour laisser passer une composante de signal de dérangement générée dans le détecteur et/ou modulée sur le trajet de transmission dans le signal reçu,
à l'entrée duquel est également appliqué le signal de détecteur analogique transmis,
**caractérisé en ce que**
le signal de sortie du deuxième filtre (12) sert de signal de dérangement (13) qui est exploité par le dispositif de commande comme signal indépendant du signal utile (11) pour la détection des composantes de signal de dérangement du signal de détecteur.

2. Système de commande d'un véhicule automobile selon la revendication 1, **caractérisé en ce que** le premier filtre (10) est un filtre passe-bande.

3. Système de commande d'un véhicule automobile selon la revendication 1 ou 2, **caractérisé en ce que** le deuxième filtre (12) est un filtre coupe-bande.

4. Système de commande d'un véhicule automobile selon les revendications 2 et 3, **caractérisé en ce que** les courbes de fréquence de filtre du premier et du deuxième filtre (10, 12) ont des allures complémentaires.

5. Système de commande d'un véhicule automobile selon l'une quelconque des revendications précédentes, **caractérisé en ce qu'**un redresseur est raccordé à la sortie du deuxième filtre (12) pour redresser le signal de sortie du deuxième filtre.

6. Système de commande d'un véhicule automobile selon l'une quelconque des revendications précédentes, **caractérisé par** un circuit de lissage raccordé à la sortie du deuxième filtre (12) ou du redresseur selon la revendication 5.

7. Système de commande d'un véhicule automobile selon l'une quelconque des revendications précédentes, **caractérisé par** un détecteur de seuil qui est raccordé à la sortie du deuxième filtre (12), du redresseur selon la revendication 5 ou du circuit de lissage selon la revendication 6.

8. Système de commande d'un véhicule automobile selon l'une quelconque des revendications précédentes, **caractérisé par** un filtre passe-bande (3) qui est raccordé à la sortie du détecteur (2) et dont le signal de sortie représente la composante du signal utile.

9. Système de commande d'un véhicule automobile selon l'une quelconque des revendications précédentes, **caractérisé par** un filtre passe-bas (4) qui est raccordé à la sortie du détecteur (2) du côté de l'entrée et dont la sortie est raccordée à un amplificateur (5).

10. Système de commande d'un véhicule automobile selon les revendications 8 et 9, **caractérisé par** un élément logique (7) relié aux sorties du filtre passe-bande (3) et de l'amplificateur (5), en particulier sous forme d'un additionneur qui génère le signal de détecteur et qui le transmet au dispositif de commande (9) par l'intermédiaire d'une ligne de raccordement (8).
